Europäisches Patentamt

European Patent Office

Office européen des brevets

(11) Veröffentlichungsnummer : **0 023 283**
**B1**

# EUROPÄISCHE PATENTSCHRIFT

(45) Veröffentlichungstag der Patentschrift :
07.11.84

(21) Anmeldenummer : 80103795.3

(22) Anmeldetag : 04.07.80

(51) Int. Cl.³ : **G 01 F   9/02**

(54) Anordnung zur Gewinnung einer Aussage bezüglich eines wirtschaftlichen und/oder unwirtschaftlichen Betriebes eines Kraftfahrzeuges.

(30) Priorität : 13.07.79 DE 2928318

(43) Veröffentlichungstag der Anmeldung :
04.02.81 Patentblatt 81/05

(45) Bekanntmachung des Hinweises auf die Patenterteilung : 07.11.84 Patentblatt 84/45

(84) Benannte Vertragsstaaten :
AT CH FR GB IT LI NL SE

(56) Entgegenhaltungen :
EP-A- 0 010 436
DE-A- 2 013 752
DE-A- 2 807 604
FR-A- 2 108 148
FR-A- 2 369 117
US-A- 3 347 092
US-A- 3 921 444
US-A- 3 983 533
PATENTS ABSTRACTS OF JAPAN, Band 2, Nr. 123, 14. Oktober 1978, Seite 3963 M 78
AUTOMOTIVE ENGINEERING, Band 86, Nr. 10, Oktober 1978, New York, US, "Trip computer is microprocessor-based", Seiten 56-61
PATENTS ABSTRACTS OF JAPAN, Band 1, Nr. 121, 13. Oktober 1977, Seite 4953 E 77

(73) Patentinhaber : Kienzle Apparate GmbH
Heinrich-Hertz-Strasse
D-7730 Villingen-Schwenningen (DE)

(72) Erfinder : Kuhn, Peter, Dr.
Grimmelshauserstrasse 3
D-7730 Villingen-Schwenningen (DE)
Erfinder : Kolar, Max
Glückaufstrasse 4
D-7080 Aalen 1 (DE)
Erfinder : Weber, Robert
Alemannenstrasse 20
D-7734 Brigachtal 1 (DE)
Erfinder : Koch, Siegfried
Stettiner Strasse 9
D-7730 Villingen-Schwenningen (DE)

## Beschreibung

Die Erfindung betrifft eine Anordnung zur Gewinnung einer Aussage bezüglich der Wirtschaftlichkeit der Betriebsweise eines Kraftfahrzeuges mit Verbrennungsmotor, mit mehreren, jeweils unterschiedliche Betriebsgrößen des Kraftfahrzeuges erfassenden Gebern, von denen einer ein Drehzahlgeber ist ; Komparatoreinrichtungen zur Ermittlung der Zugehörigkeit der jeweils erfaßten Momentanwerte der Betriebsgrößen zu bestimmten Wertebereichen durch Vergleich der Momentanwerte mit die Grenzen der Wertebereiche repräsentierenden Schwellwerten ; einer Verknüpfungsschaltung zur Bildung eines den Betriebszustand des Kraftfahrzeuges charakterisierenden Betriebswertes durch Verknüpfung der Vergleichsergebnisse ; einer Anzeige- und Bewertungsschaltung zur Anzeige des Ergebnisses einer anhand vorgegebener Bewertungskriterien erfolgten Bewertung des von der Verknüpfungsschaltung erzeugten Betriebswertes, welche Signalgeber zur Realisierung mehrerer Signalzustände aufweist, wobei jeweils ein Signalzustand einer Gruppe gleich bewerteter Verknüpfungen zugeordnet ist.

Wenn von einem wirtschaftlichen Betrieb eines Kraftfahrzeuges, insbesondere eines LKWs oder Busses, die Rede ist, so verbirgt sich hinter diesem Begriff heute im allgemeinen die Vorstellung, einen bestimmten Transportauftrag mit dem geringstmöglichen, besser gesagt mit dem unbedingt nötigen Kraftstoffbedarf, auszuführen.

Selbstverständlich ist mit « unbedingt nötig » jener Kraftstoffbedarf gemeint, der sich — von groben Fahrfehlern abgesehen — bei vernünftigem Fahrverhalten, d. h. Einfügen in den fließenden Verkehr und Einhalten von Richtgeschwindigkeiten, falls dies die geographischen Verhältnisse erlauben, ohnehin ergibt. So kann, wenn beispielsweise ein voll beladener LKW eine Steigung zu bewältigen hat, diese Fahrsituation nicht generell als unwirtschaftlich gelten, da ein in diesem Falle erhöhter Kraftstoffbedarf nicht allein für die Bewältigung einer Strecke sondern auch für die zwangsläufig erforderliche Hubarbeit anfällt und zur Erfüllung des Transportauftrages auch gedeckt werden muß. Wesentlich ist, daß in solchen Fällen das Fahrverhalten dem Prinzip des « unbedingt Notwendigen » angepaßt wird, was beispielsweise Schalten, auf alle Fälle rechtzeitiges Schalten, unter Umständen sogar Gasgeben, erforderlich machen kann.

Ausnahmen, die eine Korrektur dieser grundsätzlichen Beurteilung des « unbedingt nötigen » Kraftstoffbedarfs erfordern, sind beispielsweise dann gegeben, wenn beim Transport leicht verderblicher Güter verhältnismäßig enge, zeitliche Grenzen gesetzt sind oder Liefer- und Abholtermine bzw. Fahrpläne anderer Transportmittel eingehalten werden müssen.

Bekanntlich wurde das Problem einer Anzeige wirtschaftlichen und/oder unwirtschaftlichen Betriebes eines Kraftfahrzeuges bisher durch Messen des momentanen Kraftstoffverbrauchs, d.

h. durch Messen der pro Weg- oder Zeiteinheit verbrauchten Kraftstoffmenge oder auch bei entsprechendem Umrechnen der pro Kraftstoffmengeneinheit zurücklegbaren Wegstrecke zu lösen versucht, wobei eine Vielzahl direkter und indirekter Meßverfahren mit zum Teil sehr hohem meßtechnischem Aufwand bekannt wurden. Es ist ferner bekannt, die absolut verbrauchten Kraftstoffmengen durch Zählen und gegebenenfalls Aufzeichnen zu erfassen und später bei der Auswertung beispielsweise der Fahrdiagramme eines Fahrtschreibers für eine Wirtschaftlichkeitsbeurteilung oder eine auftragbezogene Kostenermittlung heranzuziehen, wobei jedoch hinsichtlich der erforderlichen Durchflußgeber, wenn die Meßfehler insbesondere wegen des im Kraftfahrzeugbetrieb unvermeidbaren Temperaturganges in vernünftigen Grenzen gehalten werden sollen, auch bei dieser Methode ein hoher gerätetechnischer Aufwand erforderlich ist.

Auf der anderen Seite gibt die Momentanwertanzeige des Kraftstoffverbrauchs, der nicht notwendigerweise eine hochgenaue Durchflußmessung zugrunde liegen muß und die als Tendenzanzeige ausgebildet sein kann, dem Fahrer die Möglichkeit, sein Fahrverhalten entsprechend dieser Anzeige zu ändern. Die Interpretation der Anzeige anhand der gegebenen Fahrsituation wird dem Fahrer jedoch nicht abgenommen. Somit führt diese Anzeige, abgesehen davon, daß sie relativ unruhig ist und Dämpfungsmaßnahmen vorgesehen werden müssen, sowohl zu rein subjektiven, gefühlsmäßigen Änderungen des Fahrverhaltens als auch zu einer gewissen Verunsicherung des Fahrers, wenn er einerseits auf konsequente Minimierung des Kraftstoffbedarfs bedacht ist, andererseits aber Richtgeschwindigkeiten einhalten und sich, um nicht zum Verkehrshindernis zu werden, möglichst dem fließenden Verkehr einordnen soll. Darüber hinaus vergrößert eine Vermehrung insbesondere der momentanwertanzeigenden Meßgeräte im Kraftfahrzeug, die für ihre Ablesung relativ viel Zeit beanspruchen und somit die Aufmerksamkeit des Fahrers vom Verkehrsgeschehen ablenken, das Sicherheitsrisiko, so daß letzten Endes ein solches Gerät, weil es nicht praxisgerecht ist, von einem geübten Fahrer ignoriert wird und somit sinnlos ist.

Eine genauere Beurteilung des momentanen Betriebszustandes eines Kraftfahrzeuges, als sie durch eine bloße Kraftstoffverbrauchsanzeige ermöglicht wird, läßt sich beispielsweise durch eine Anordnung erzielen, wie sie mit der DE-A-2 357 770 bekannt geworden ist. Diese Anordnung sieht einen dem Zeiger eines Tachometers koaxial zugeordneten Zusatzzeiger vor, der getrieblich mit dem Gaspedal in Wirkverbindung steht, so daß die Relation zwischen der mengenmäßig durch das Gaspedal gesteuerten Kraftstoffzufuhr und der momentanen Fahrzeuggeschwindigkeit erkennbar wird. Diese Anzeigekombination erlaubt ein Abschätzen dahingehend, ob beispielsweise durch Schalten ein Anpassen der Fahrweise an ein günstigeres Kraftstoffverbrauch-Geschwindigkeits-Verhältnis erzielt werden kann. Sie muß jedoch vom Fahrer zunächst richtig interpretiert werden, wozu in der obigen Anmeldung nur andeutungsweise Hinweise gegeben werden, und sie kann dem größten Teil der im praktischen Betrieb vorkommenden kritischen, vielfach nur scheinbar unwirtschaftlichen Betriebszustände, abgesehen davon, daß auch kein weiterverarbeitbarer Wert gebildet wird, nicht gerecht werden.

Demgegenüber zeigt die DE-A-27 31 568 eine Anordnung zur Bildung einer zumindest qualitativen Aussage über den momentanen Kraftstoffverbrauch, wobei Drosselklappenstellungen und Drehzahlschwellwerte mittels eines Potentiometers derart miteinander verknüpft werden, daß voneinander unterscheidbare Kraftstoffverbrauchsanzeigen für Last-, Schiebe- und Leerlaufbetrieb eines Kraftfahrzeuges erzielbar sind. Diese Anordnung bietet demnach eine an sich selbstverständliche Wirtschaftlichkeits- bzw. Unwirtschaftlichkeitsaussage lediglich hinsichtlich der beiden Betriebszustände « Leerlauf » und « Schiebebetrieb » und ist für den angestrebten Zweck, nämlich einer Wirtschaftlichkeitsaussage für den Fahrzustand, ebensowenig geeignet wie die übrigen bekannten Kraftstoffverbrauchsmeßeinrichtungen.

Die FR-A-2 369 117 befaßt sich ebenfalls mit der Verknüpfung von Drehzahlwerten und Drosselklappenstellungen, wobei Vergleichsschaltungen eine Verknüpfungsschaltung nachgeschaltet ist und die verknüpften Werte über eine Bewertungsschaltung zur Anzeige gebracht werden. Auch diese Einrichtung sagt nichts aus über den tatsächlichen Fahrzustand des Fahrzeuges. Ebensowenig kann der Gegenstand der US-A-3 983 533, der eine Verknüpfung der Zündfrequenz mit der Winkelbeschleunigung eines Getriebeelementes des Fahrzeuges vorsieht, eine wahre Aussage über den Betriebszustand bieten, weil weder die zurückgelegte Strecke, noch eine Aussage über den Kraftstoffverbrauch berücksichtigt sind.

Eine weitere durch die DE-A-28 07 604 bekannt gewordene Anordnung befaßt sich im wesentlichen mit der Verknüpfung und Anzeige der Betriebsgrößen « Kraftstoffverbrauch » und « Beschleunigung », wobei mit einer Leuchtdiodenmatrix das jeweilige Kraftstoffverbrauch-Beschleunigungs-Verhältnis als Leuchtpunkt angezeigt wird. Da, ähnlich wie bei der erstgenannten DE-A-23 57 770 die verarbeiteten Betriebsgrößen ohnehin gleich bzw. äquivalent sind, lassen sich auch bei dieser Anordnung wesentliche Betriebszustände eines Kraftfahrzeuges nur mangelhaft wiedergeben, so daß die auch in diesem Falle dem Fahrer überlassene Interpretation der Anzeige zu einer völlig falschen Anpassung seiner Fahrweise führen kann. Abgesehen von dem erforderlichen Aufwand hinsichtlich der Anzeigemittel und der Kraftstoffverbrauchsmeßeinrichtung erfordert die Anordnung gemäß der DE-A-28 07 604 vom Fahrer erheblichen Erkennungsaufwand, zumal sich die Anzeige während der Fahrt stetig ändert, in vielen Fällen sich so rasch ändert, daß eine Reaktion des Fahrers auf die Anzeige gar nicht möglich ist.

Da dementsprechend eine bloße Kraftstoffverbrauchsanzeige oder auch die aus dem Stand der Technik bekannten Kombinationsanzeigen für die Beurteilung des momentanen Betriebszustandes eines Kraftfahrzeuges nicht oder nur bedingt geeignet sind, war der vorliegenden Erfindung die Aufgabe gestellt, eine Anordnung zu schaffen, die die Mängel der bereits bekannten Lösungen vermeidet und mit möglichst geringem, die jeweiligen Betriebszustände jedoch ausreichend kennzeichnenden, meßtechnischen Aufwand eine Anzeige gestattet, die einerseits eine interpretationsfreie Aussage über den wirtschaftlichen und/oder unwirtschaftlichen Betrieb eines Kraftfahrzeuges bietet, zumindest aber groß unwirtschaftliche Betriebszustände signalisiert, andererseits vom Fahrer ein Minimum an Aufmerksamkeit für ihre Erkennung erfordert.

Die erfindungsgemäße Lösung dieser Aufgabe geht aus von der Erkenntnis, daß nicht notwendigerweise der momentane Kraftstoffverbrauch die entscheidende Betriebsgröße für eine Aussage hinsichtlich eines wirtschaftlichen oder unwirtschaftlichen Betriebes eines Kraftfahrzeuges darstellt, sondern daß vielmehr die mit wesentlich einfacheren Mitteln zu messende Motordrehzahl eine gleichwertige Aussage liefert, zumindest was den eigentlichen Betriebszustand der Maschine anbelangt, daß diese Aussage ferner durch die Aussage einer weiteren, den Bewegungszustand des Fahrzeuges charakterisierenden Betriebsgröße, beispielsweise die Beschleunigung bzw. Verzögerung, zu ergänzen ist, so daß auch die objektiven, durch geographische Gegebenheiten, durch Ladung und Wind am Fahrzeug wirksamen Einflußgrößen auf dessen Bewegungszustand berücksichtigt werden und daß, um auch den subjektiven Einfluß des Fahrers berücksichtigen zu können, beispielsweise die momentane Stellung des Gaspedals oder eine der Gaspedalstellung äquivalente Betriebsgröße in die Betrachtung mit aufgenommen werden müssen.

Die erfindungsgemäße Lösung ist demnach dadurch gekennzeichnet, daß zusätzlich zum Drehzahlgeber ein Gaspedal-Stellungsgeber sowie ein Beschleunigungsgeber, der vom Ausgangssignal eines Weggebers für die vom Kraftfahrzeug zurückgelegten Wegstrecken gespeist ist, vorgesehen sind ; die dem Drehzahlgeber sowie dem Beschleunigungsgeber innerhalb der Komparatoreinrichtungen zugeordneten Komparatorschaltungen jeweils mit Mitteln zur Einstellung der Schwellwerte versehen sind und die Verknüpfungsschaltung als Matrixschaltung so ausgebildet ist, daß sich der Betriebswert aus den die Vergleichsergebnisse darstellenden Ausgangssignalen aller Komparatorschaltungen zusammensetzt.

Ein Ausführungsbeispiel der Erfindung sieht vor, daß die Verarbeitung der von den Gebern gelieferten Betriebsgrößen unter Verwendung eines Mikroprozessors erfolgt, derart daß für jeden ermittelten Drehzahlwert ein den jeweiligen Drehzahlbereich kennzeichnendes Code-Wort-Element gebildet wird, daß für jeden ermittelten Beschleunigungswert ein den jeweiligen Beschleunigungsbereich kennzeichnendes Code-Wort-Element gebildet wird, daß außerdem für den jeweiligen Stellungsbereich des Gaspedals ein Code-Wort-Element gebildet wird und daß die gebildeten Code-Wort-Elemente in einem Arbeitsspeicher des Mikroprozessors zu einem Code-Wort verodert werden, welches nach Weiterverarbeitung mit dem bewertungsgemäß festgelegten Inhalt eines Programmspeichers im Rechenwerk des Mikroprozessors ein entsprechendes Signal auslöst.

Eine weitere Ausgestaltung der Erfindung sieht vor, daß als Signalgeber mehrere Anzeigelampen mit unterschiedlicher Farbwiedergabe vorgesehen sind und/oder daß die Signalgabe in Form wörtlicher Befehle (z. B. Schalten, Gas geben) erfolgt und daß parallel zur Signalgabe Registriermittel eines Fahrtschreibers angesteuert werden.

Abgesehen davon, daß im Vergleich mit dem Stand der Technik erst die erfindungsgemäße Anordnung in Verbindung mit der getroffenen Auswahl der zu verarbeitenden Betriebsgrößen eine treffende betriebsspezifische Aussage liefert, bietet die Erfindung durch die ausschließliche Verarbeitung von durch Schwellwerte bestimmten Betriebsgrößenbereichen den Vorteil, daß geberseitig, d. h. bei der Erfassung der Betriebsgrößen, relativ grobe Toleranzen zugestanden werden können. Im übrigen wird durch die Erkenntnis, daß, um zumindest grob unwirtschaftliche Fahrweisen zu kennzeichnen, es ausreicht, bei einer geringen Anzahl von Betriebsgrößen lediglich einige wenige Schwellwerte festzulegen, der Aufwand für die angestrebte Aussage niedrig gehalten. Vorteilhaft ist ferner, daß für das Erfassen der Motordrehzahlen und der zurückgelegten Wegstrecken die ohnehin in einem Lkw oder Bus vorhandenen Geber genutzt werden können und lediglich die erforderlichen Stellungsgeber für die Gaspedal- oder Regelstangenabgriffe vorgesehen werden müssen und daß eine aufwendige Kraftstoffverbrauchsmessung auf alle Fälle vermieden wird. Andererseits ist es für die Fahrpraxis von besonderem Vorteil, daß dem Fahrer beispielsweise durch verschiedenfarbige Signale mitgeteilt wird, ob seine Fahrweise als gut oder schlecht, möglicherweise lediglich als bedingt befriedigend zu bewerten ist, und diese Signale evtl. durch wörtliche Befehle wie « Gasgeben » oder « Schalten » ergänzt werden. Derartige Signale bedürfen keiner Interpretation und verlangen vom Fahrer keinen besonderen Erkennungsaufwand.

Ein besonderer Vorteil ist ferner dadurch gegeben, daß durch « Verschieben » der Schwellwerte, also durch Vergrößern oder Verkleinern der Betriebsgrößenbereiche, auf verhältnismäßig einfache Weise eine fahrzeugspezifische Bewertung, d. h. eine Anpassung des Bewertungsmusters an die getriebliche und maschinelle Ausrüstung des betreffenden Fahrzeuges, ermöglicht wird. Auch läßt sich, wenn nötig, die Aussage, die durch die gewählten drei Betriebsgrößen möglich ist, durch weitere Unterteilung oder durch Hinzunahme weiterer Betriebsgrößen verfeinern und gegebenenfalls mit unterschiedlichen Bewertungsmustern beurteilen.

Für die angestrebte Aussage ist somit nicht das Anzeigen von Betriebszuständen an sich, vorausgesetzt daß diese wirklich kennzeichnend gebildet worden sind, entscheidend, sondern die Anzeige einer fahrzeugspezifischen Bewertung dieser Betriebszustände. Im übrigen kennt ein geübter Fahrer die Betriebszustände seines Fahrzeuges ziemlich genau, muß sie also nicht erst angezeigt bekommen. Die Anzeige der Bewertung der Betriebszustände versetzt ihn aber erst in die Lage, zweifelsfreie Maßnahmen zur Einhaltung oder Schaffung einer wirtschaftlichen Fahrweise zu treffen.

Um die Bewertung der möglichen, jeweils bestimmten Fahr- oder Betriebszuständen entsprechenden Verknüpfungen überschaubar zu halten, insbesondere um eine für den üblichen Lkw- oder Bus-Betrieb sinnvolle Bewertung treffen zu können, was einschließt, daß dem Fahrer hinsichtlich seiner Fahrweise ein brauchbarer Freiraum gesichert sein sollte, müssen selbstverständlich gewisse Rahmenbedingungen aufgestellt werden. So sei beispielsweise festgelegt, daß der untere Bereich der als Leitgröße anzusehenden Motordrehzahl, d. h. der Leerlaufdrehzahlbereich, nicht in die Bewertung eingehen soll, somit eine Anzeige grundsätzlich erst bei « Fahrt » erfolgen soll und ein Drehzahlbereich beispielsweise bis zu 60 % der Nenndrehzahl des Motors als optimal zu werten ist. Dabei wird davon ausgegangen, daß sich der geübte Fahrer über die Unwirtschaftlichkeit des Leerlaufbetriebszustandes in bezug auf den Transportauftrag im klaren ist, ihn aber an Ampeln und Schranken notgedrungen hinnehmen muß. Ein weiterer Drehzahlschwellwert könnte dann beispielsweise bei 85 % der Nenndrehzahl festgelegt werden. Als optimaler Fahrzustand soll ferner jener Fahrzustand angesehen werden, bei dem, bezogen auf den günstigsten Drehzahlbereich, das Fahrverhalten des Fahrzeuges als « leicht ziehend » gekennzeichnet werden kann. Es muß außerdem davon ausgegangen werden, daß der Fahrer fahren kann und weiß, daß er zurückschalten muß, wenn durch Gasgeben beispielsweise keine Beschleunigung mehr möglich ist, der Betriebszustand des Fahzeuges somit nicht mehr als « leicht ziehend » bezeichnet werden kann.

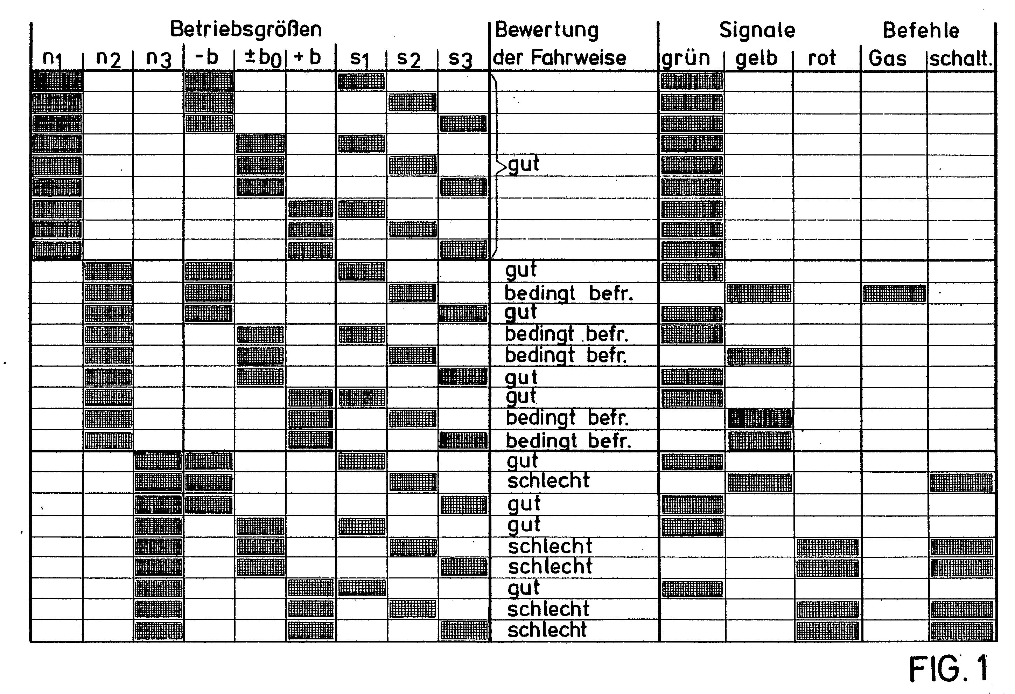

Im folgenden sei ein Bewertungsbeispiel anhand der als Fig. 1 dargestellten Verknüpfungstabelle näher erläutert.

In den Spalten $n_1$, $n_2$ und $n_3$ der Verknüpfungstabelle sind die für einen bestimmten Fahrzeugtyp ausgewählten Drehzahlbereiche aufgeführt. Dabei sei mit $n_1$ der bereits erwähnte

Drehzahlbereich zwischen der Leerlaufdrehzahl und ca. 60 % der Nenndrehzahl eines Motors bezeichnet, mit $n_2$ der Drehzahlbereich zwischen dem 60 %-Schwellwert und dem beispielsweise bei 85 % der Nenndrehzahl festgesetzten Schwellwert und mit $n_3$ der sich bis zur maximalen Motordrehzahl anschießende Drehzahlbereich. Die folgenden Spalten der Verknüpfungstabelle sind jeweils Beschleunigungsbereichen zugeordnet, wobei mit $\pm b_0$ ein Bereich gekennzeichnet ist, der von jeweils einem fahrzeugspezifisch, beispielsweise in der Größenordnung von 0,5 m/Sek.$^2$ festlegbaren Verzögerungsschwellwert $-\Delta b$ und einem Beschleunigungsschwellwert $+\Delta b$ begrenzt ist, während mit $-b$ Verzögerungswerte $>$ als $-\Delta b$ und mit $+b$ Beschleunigungswerte $>$ als $+\Delta b$ bezeichnet sein sollen. Mit $s_1$, $s_2$ und $s_3$ sind fernet Betätigungsbereiche von dem Gaspedal oder der Regelstange einer Einspritzmaschine zugeordneten Schaltern bezeichnet. Dabei kann beispielsweise festgelegt sein, daß der Schwellwert zwischen $s_1$ und $s_2$ bei 10 % der Vollgasstellung und jener zwischen $s_2$ und $s_3$ bei 60 % der Vollgasstellung eingestellt wird.

Die Bewertung der sich in jeder Zeile der Tabelle ergebenden Betriebsgrößenverknüpfung und somit der mit der erstellten Verknüpfungstabelle erfaßbaren Betriebszustände ist in der nächst folgenden Spalte aufgeführt. Weiter folgen die sich aus dieser Bewertung ergebenden Signale, beispielsweise in Form von Lichtsignalen unterschiedlicher Farbe — für besonders kritische Betriebszustände sind auch akustische Signale denkbar — und gegebenenfalls wörtlichen Befehlen.

Beim Start eines Fahrzeuges wird sich bei zunächst ebener Fahrbahn der Betriebszustand $n_1$, $+b$, $s_3$ ergeben, d. h. der Fahrer wird durch Gasgeben die Motordrehzahl erhöhen und versuchen, das Fahrzeug zu beschleunigen, um auf eine vorgeschriebene oder ihm sinnvoll erscheinende Geschwindigkeit zu gelangen. Bleibt der Fahrer auf dem Gas, so geht der obige Betriebszustand mit großer Wahrscheinlichkeit über in den Betriebszustand $n_2$, $+b$, $s_3$. Gleichzeitig ändert sich die bisherige « gut »-Anzeige in eine « bedingt befriedigend »-Anzeige, d. h. es wird davon ausgegangen, daß sich der neuerliche Betriebszustand nunmehr einem unwirtschaftlichen Zustand nähert und daß das Erreichen der angestrebten Geschwindigkeit nicht notwendigerweise in der kürzestmöglichen Zeit erfolgen muß, also möglicherweise auch durch Zurücknehmen des Gases mit geringerer Beschleunigung und rechtzeitigem Hochschalten erzielbar wäre, wobei der Motor im günstigsten Drehzahlbereich $n_1$ arbeiten würde und sich nach Erreichen der angestrebten Geschwindigkeit — falls dies mit der maximalen Motordrehzahl im Bereich $n_1$ noch möglich ist — beispielsweise ein Betriebszustand $n_1$, $\pm b_0$, $s_2$ einstellen würde.

Wenn nun der Fahrer weiterhin « Vollgas » fährt und die Motordrehzahl in den Bereich $n_3$ gelangt ist, somit der Betriebszustand $n_3$, $+b$, $s_3$ erreicht worden ist, so wird dem Fahrer durch eine « schlecht »-Anzeige signalisiert, daß er seine Fahrweise ändern soll. Nimmt er dann das Gas zurück, so wird ihm im Zustand $n_3$, $+b$, $s_2$ zusätzlich signalisiert « hochzuschalten ». Es ist aber auch möglich, daß das Fahrzeug diesen Betriebszustand gar nicht erreicht, sondern zuvor bereits in die Betriebszustände $n_3$, $\pm b_0$, $s_2$ bzw. $s_3$ eintritt, wobei dem Fahrer ebenfalls, abgesehen von einer « schlecht »-Anzeige « schalten » signalisiert wird.

Wenn nun ein Hochschalten erfolgt ist, so wird die Motordrehzahl auf einen niedrigeren Wert, beispielsweise $n_1$, zurückspringen, und es wird sich ein Betriebszustand $n_1$, $\pm b_0$, $s_2$ einstellen. Um weiter an Geschwindigkeit zu gewinnen, kann der Fahrer — wie beschrieben — wieder in relativ unwirtschaftlicher Weise beschleunigen, wobei er wiederum zum Hochschalten augefordert werden würde, oder aber er versucht, mit mäßiger Beschleunigung auszukommen, früher und somit unaufgefordert zu schalten und sich — wie bereits beschrieben — im optimalen Drehzahlbereich $n_1$ zu halten. Nach den Erfahrungen entspricht letzteres Verhalten auch der allgemein üblichen Fahrweise eines erfahrenen Fahrers.

Gerät das Fahrzeug nun auf eine Gefällstrecke, wird der Fahrer das Gas wegnehmen, die Drehzahl des Motors kann aber dennoch auf $n_2$ oder $n_3$ ansteigen. In diesem Falle müssen auch Betriebszustände, in denen das Fahrzeug beschleunigt, also z. B. die Betriebszustände $n_2$, $+b$, $s_1$ oder $n_3$, $+b$, $s_1$ — in diesem Betriebszustand könnte es zweckmäßig sein, ein Übertourungssignal zu geben — als « gut » bewertet werden, weil der Kraftstoffverbrauch minimal ist, d. h. unterhalb der 10 % Schwelle liegt, unter Umständen sogar gebremst werden muß und dennoch hohe Geschwindigkeiten erzielbar sind.

Hat andererseits das Fahrzeug eine Steigung zu überwinden, so wird die Motordrehzahl absinken und der Fahrer wird durch Herunterschalten versuchen, die Geschwindigkeit des Fahrzeuges zu stabilisieren bzw. den Betriebszustand « leicht ziehend » herzustellen. Es kann dabei zunächst aus dem Betriebszustand $n_1$, $-b$, $s_2$ über $n_1$, $-b$, $s_3$ der Betriebszustand $n_1$, $\pm b_0$, $s_3$ eintreten, womit bereits eine Stabilisierung erreicht wäre, oder es wird ein Betriebszustand eintreten, der der Verknüpfung $n_2$, $-b$, $s_2$ entspricht. Ist in diesem Falle durch Gasgeben ($n_2$, $-b$, $s_3$) ein Aufheben der Verzögerung erzielbar, stellt sich der Betriebszustand $n_2$, $\pm b_0$, $s_3$ ein. Dieser Betriebszustand ist dann zur Überwindung der Steigung unbedingt notwendig und somit als « gut » zu bewerten. Ist andererseits durch weiteres Gasgeben keine Verringerung der eingetretenen Verzögerung erzielbar, so kann weiteres Herunterschalten erforderlich sein, so daß eine gleichförmige Geschwindigkeit möglicherweise erst im Zustand $n_3$, $\pm b_0$, $s_1$ erzielbar ist.

Steigt wenn die Steigung überwunden ist bzw. das Fahrzeug einen weniger steilen Streckenabschnitt befährt, ausgehend vom Betriebszustand $n_2$, $\pm b_0$, $s_3$ die Motordrehzahl an, so wird der Fahrer, falls er nicht rechtzeitig schaltet, beim

Erreichen des $n_2/n_3$ Schwellwertes durch ein entsprechendes Signal darauf aufmerksam gemacht, daß er, um wirtschaftlich zu fahren, hochschalten sollte. Im anderen Falle, dem Betriebszustand $n_3$, $\pm b_0$, $s_1$ wird der Fahrer nach Überwindung der Steigung eine höhere Geschwindigkeit erzielen wollen und diese Absicht durch Gasgeben äußern. Somit ergibt sich ebenfalls der Betriebszustand $n_3$, $\pm b_0$, $s_2$ bzw. $s_3$, so daß ein Signal zum Hochschalten ausgelöst werden wird.

Es sei noch erwähnt, daß die zu treffende Bewertung auch Autobahnfahrten mit relativ hoher Richtgeschwindigkeit als « gut » oder « bedingt befriedigend » ausweisen sollte, dabei aber nicht notwendigerweise der Drehzahlbereich $n_3$ gefahren werden muß, sondern daß selbstverständlich im höchsten Gang, beispielsweise die Verknüpfung $n_2$, $\pm b_0$, $s_3$ zum Halten dieser Richtgeschwindigkeit gefahren werden kann, was bedeutet, daß zur Erreichung dieser Geschwindigkeit durchaus ein kurzzeitiges Eintreten in den nicht optimalen Drehzahlbereich $n_3$ notwendig sein dürfte. Dabei könnte beispielsweise ein Betriebszustand $n_3$, $+ b$, $s_3$ auftreten, dessen Bewertung in Fig. 1 als « schlecht » ausgewiesen ist, der aber durchaus als « bedingt befriedigend » bewertet werden kann, weil er sich mehr oder weniger bei jedem Überholmanöver schon der Sicherheit wegen einstellen sollte.

Es sei noch erwähnt, daß die zu gebenden Signale und Befehle selbstverständlich an einer geeigneten, im Blickfeld des Fahrers liegenden Stelle im Armaturenbrett erscheinen müssen, zusätzlich aber auch auf dem im Fahrzeug befindlichen Fahrtschreiber übertragen werden können, um sie dort, beispielsweise im Form unterschiedlich breiter Balkendiagramme, aufzuzeichnen und somit für eine spätere Auswertung bereitzustellen.

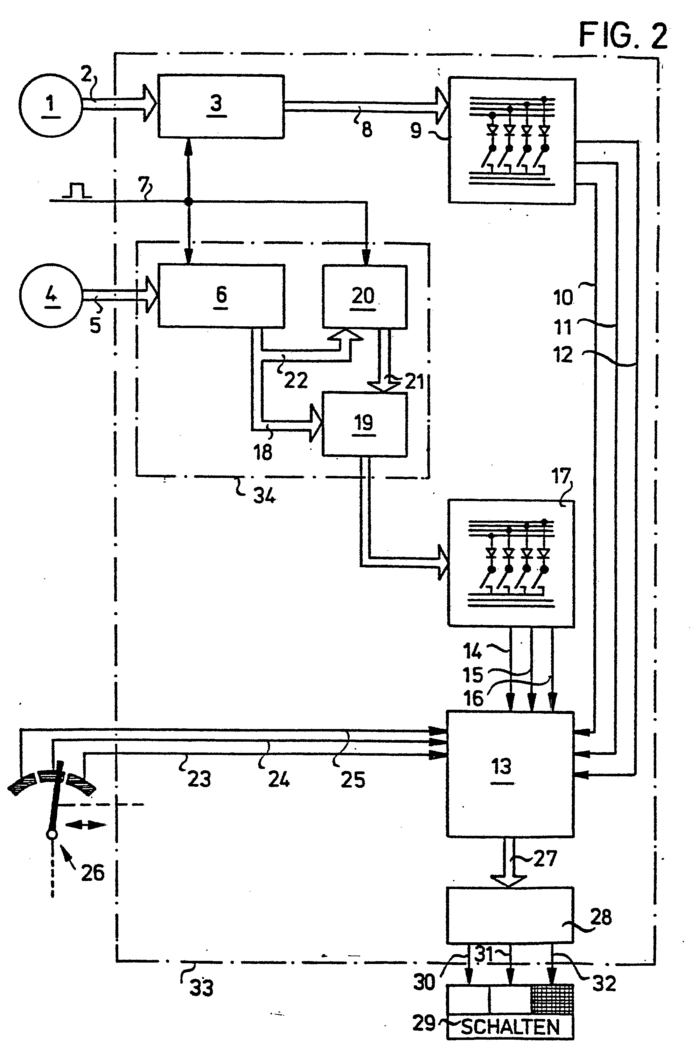

Das als Fig. 2 in Form eines Blockschaltbildes dargestellte Ausführungsbeispiel zeigt einen Geber 1, der drehzahlabhängige Impulse liefert, die über die Leitung 2 in einen Zähler 3 einlaufen. Gleichzeitig werden von einem Geber 4 über eine Leitung 5 wegabhängig erzeugte Impulse in einen Zähler 6 eingespeist. Die Meßbasis wird von einem in an sich bekannter Weise gebildeten Zeittakt bestimmt, der über eine Leitung 7 sowohl am Zähler 3 als auch am Zähler 6 ansteht und vorzugsweise auf 1 Sek. festgelegt ist. Der somit nach Ablauf von 1 Sek. bestimmte Drehzahlwert des Motors steht über die Leitung 8 am Eingang eines Vergleichers 9 an, dem, wie symbolisch dargestellt ist, intern oder extern Codierschalter zugeordnet sind, mit denen fahrzeugspezifisch jene Drehzahlschwellwerte festlegbar sind, die die Drehzahlbereiche $n_1$, $n_2$ und $n_3$ markieren. Der Ausgang des Vergleichers 9 und somit das im Vergleicher 9 gebildete, den Betriebsgrößenbereich der gemessenen Drehzahl kennzeichnende Signal ist über Leitungen 10, 11 und 12 mit einer Verknüpfungsmatrix 13 verbunden. Weitere Leitungen 14, 15 und 16 verbinden die Verknüpfungsmatrix 13 mit dem Ausgang eines zweiten Vergleichers 17, der Signale liefert, die Betriebsgrößenbereiche der jeweils ermittelten Beschleunigungswerte kennzeichnen. Zur Ermittlung der jeweiligen Beschleunigung in der mit 34 bezeichneten Beschleunigungsmeßschaltung wird, wiederum unter Zuhilfenahme des Zeittaktes als Meßbasis, im Zähler 6 ein Geschwindigkeitswert gebildet, der über die Leitung 18 einer Subtraktionsschaltung 19 überführt wird, an der gleichzeitig der in einem Speicher 20 festgehaltene Geschwindigkeitswert des vorangegangenen Meßzyklus über eine Leitung 21 ansteht. Nach Bildung der Subtraktion der beiden Geschwindigkeitswerte steht der neue Beschleunigungswert am Eingang des Vergleichers 17 an und wird mit einem dem Vergleicher extern oder intern zugeordneten Codierschalterfeld, in dem die Beschleunigungsschwellwerte fahrzeugspezifisch programmiert sind, verglichen. Gleichzeitig wird der neue Geschwindigkeitswert über die Leitung 22 in den Speicher eingelesen.

Der Verknüpfungsmatrix 13 werden außerdem über die Leitungen 23, 24 und 25 Signale zugeführt, die die jeweiligen Stellungen des Gaspedals — ein entsprechender Stellungsgeber sei mit 26 symbolisiert — kennzeichnen. Die Verknüpfung der drei Betriebsgrößen « Drehzahl », « Beschleunigung » und « Gaspedalstellung » derart, daß jeder mit jedem verknüpft ist, liefert am Ausgang der Verknüpfungsmatrix 13 eine Betriebszustandsgröße, die über die Leitung 27 an einer entsprechend dem festgelegten Bewertungsmuster für die in der Verknüpfungsmatrix 13 sich ergebenden Betriebszustände ausgebildeten ODER-Logik 28 anliegt. Auf diese Weise steuert die gebildete Betriebszustandsgröße einen Signalgeber 29, wobei dieser so ausgelegt sein kann, daß er auf verschiedene Anzeigezustände umschaltet oder aus getrennten Anzeigeelementen besteht, die unabhängig voneinander über die Leitungen 30, 31 und 32 ansteuerbar sind. Selbstverständlich kann der Signalgeber auch Mittel für eine akustische Signalgabe umfassen, die für besonders kritische Betriebszustände zweckmäßig sein dürfte.

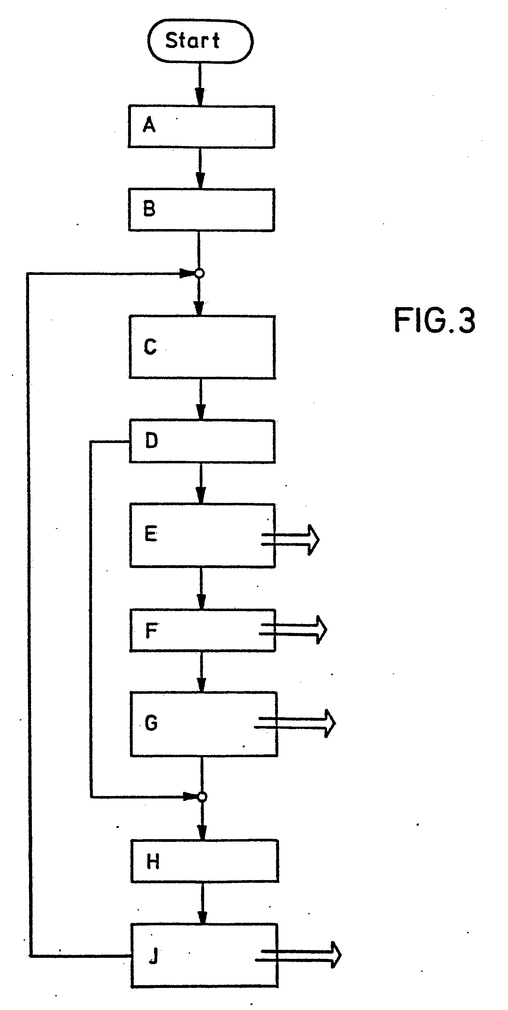

Es versteht sich von selbst, daß die Verarbeitung der gewählten und geberseitig gelieferten Betriebsgrößen nicht ausschließlich in Digitaltechnik sondern auch in Analogtechnik durchführbar ist. Ferner ist bei Verwendung eines Mikroprozessors eine Digitaltechnik mit codierter Datenerstellung und Datenübertragung möglich. Eine derartige Verarbeitung der Betriebsgrößen könnte im Prinzip nach dem in Fig. 3 dargestellten Flußplan erfolgen, wobei die in Fig. 2 eingezeichnete Linie 33 den Funktionsumfang des Mikroprozessors umreißen soll.

Als Verfahrensschritt A werden beispielsweise bei jedem neuen Starten des Motors die die Schwellwerte repräsentierenden Codierschalter für die Betriebsgrößen « Beschleunigung » und « Drehzahl » einzeln angewählt und in verschiedenen Registern abgespeichert, während als Verarbeitungsschritt B eine Übernahme von Festwerten für den Grobabgleich des jeweils ermittelten Drehzahlwertes in weitere Register erfolgt. Der folgende Verfahrensschritt C sieht ein Einlesen von Geschwindigkeits- und Drehzahlimpulsen vor, nachdem die hierfür vorgesehenen Register gelöscht worden sind. Dieser Vorgang sei beispielsweise auf 1 Sek. festgesetzt. In den weiteren Verarbeitungsfluß ist eine Stillstandserkennung D eingeschaltet, die, wenn sie positiv ist, eine Anzeige verhindert, wenn sie negativ ist, die Ladung eines der Bildung von Betriebszustandsgrößen in Form geeigneter Code-Worte dienenden Registers vorbereitet. Beim folgenden Verfahrensschritt E wird der eingelesene Drehzahlwert mit den abgespeicherten Drehzahlschwellwerten verrechnet und ein Code-Wort-Element gebildet, welches in das Code-Wort-Register eingespeist wird. Als nächsten Verfahrensschritt F wird die Gaspedalstellung eingelesen, ebenfalls ein Code-Wort-Element gebildet und im Code-Wort-Register mit dem dort bereits befindlichen Code-Wort-Element verodert. Desgleichen erfolgt mit dem Verfahrensschritt G ein Errechnen der Beschleunigung aus dem abgespeicherten alten und dem ermittelten neuen Geschwindigkeitsmeßwert und durch Vergleich mit den abgespeicherten Beschleunigungsschwellwerten ein Ermitteln eines weiteren Code-Wort-Elementes, das ebenfalls als letztes Element des angestrebten Code-Worts mit dem Inhalt des Code-Wort-Registers verodert wird. Nachdem mit dem Verarbeitungsschritt H der neue Geschwindigkeitswert in dem entsprechenden Register abgespeichert ist, erfolgt im nächsten Verfahrensschritt I im Rechenwerk des Mikroprozessors 33 ein Verarbeiten des Code-Wortes mit dem bewertungsgemäß festgelegten Inhalt eines Programmspeichers und die Ausgabe eines dem Code-Wort entsprechenden Signals. Außerdem erfolgt ein Signal zur Freigabe des nächst folgenden Verarbeitungszyklus.

Es sei noch erwähnt, daß mit der Signalgabe nicht nur Registriermittel ansteuerbar sind, sondern daß beispielsweise auch Zähler vorgesehen und betätigt werden können und somit ein zeitliches Aufsummieren der jeweils gegebenen Betriebszustände und ihrer Bewertung hinsichtlich der Fahrweise ermöglicht wird.

**Ansprüche**

1. Anordnung zur Gewinnung einer Aussage bezüglich der Wirtschaftlichkeit der Betriebsweise eines Kraftfahrzeuges mit Verbrennungsmotor, mit
— mehreren, jeweils unterschiedliche Betriebsgrößen des Kraftfahrzeuges erfassenden Gebern (1, 3 ; 4, 34 ; 26), von denen einer ein Drehzahlgeber (1, 3) ist ;
— Komparatoreinrichtungen (9 ; 17 ; 26) zur Ermittlung der Zugehörigkeit der jeweils erfaßten Momentanwerte der Betriebsgrößen zu bestimmten Wertebereichen durch Vergleich der Momentanwerte mit die Grenzen der Wertebereiche repräsentierenden Schwellwerten,
— einer Verknüpfungsschaltung (13) zur Bildung eines den Betriebszustand des Kraftfahrzeuges charakterisierenden Betriebswertes durch Verknüpfung der Vergleichsergebnisse,
— einer Anzeige- und Bewertungsschaltung (28, 29) zur Anzeige des Ergebnisses einer anhand vorgegebener Bewertungskriterien erfolgten Bewertung des von der Verknüpfungsschaltung (13) erzeugten Betriebswerts, welche Signalgeber (29) zur Realisierung mehrerer Signalzustände aufweist, wobei jeweils ein Signalzustand einer Gruppe gleich bewerteter Verknüpfungen zugeordnet ist,
dadurch gekennzeichnet, daß
— zusätzlich zum Drehzahlgeber (1, 3) ein Gaspedal-Stellungsgeber (26) sowie ein Beschleunigungsgeber (4, 34), der vom Ausgangssignal eines Weggebers (4) für die vom Kraftfahrzeug zurückgelegten Wegstrecken gespeist ist, vorgesehen ist,
— die dem Drehzahlgeber (1, 3) sowie dem Beschleunigungsgeber (4, 34) innerhalb der Komparatoreinrichtungen zugeordneten Komparatorschaltungen (9 bzw. 17) jeweils mit Mitteln zur Einstellung der Schwellwerte versehen sind und
— die Verknüpfungsschaltung als Matrixschaltung (13) so ausgebildet ist, daß sich der Betriebswert aus den die Vergleichsergebnisse darstellenden Ausgangssignalen aller Komparatorschaltungen (9, 17, 26) zusammensetzt.

2. Anordnung nach Anspruch 1, dadurch gekennzeichnet,
daß die Verarbeitung der von den Gebern gelieferten Betriebsgrößen unter Verwendung eines Mikroprozessors (33) erfolgt, derart daß für jeden ermittelten Drehzahlwert ein den jeweiligen Drehzahlbereich kennzeichnendes Code-Wort-Element gebildet wird,
daß für jeden ermittelten Beschleunigungswert ein den jeweiligen Beschleunigungsbereich kennzeichnendes Code-Wort-Element gebildet wird,
daß außerdem für den jeweiligen Stellungsbereich des Gaspedals ein Code-Wort-Element gebildet wird und
daß die gebildeten Code-Wort-Elemente in einem Arbeitsspeicher des Mikroprozessors (33) zu einem Code-Wort verodert werden, welches nach Weiterverarbeitung mit dem bewertungsgemäß festgelegten Inhalt eines Programmspeichers im Rechenwerk des Mikroprozessors (33) ein entsprechendes Signal auslöst.

3. Anordnung nach Anspruch 1 und 2, dadurch gekennzeichnet,
daß als Signalgeber (29) mehrere Anzeigelampen mit unterschiedlicher Farbwiedergabe vorgesehen sind,
und/oder daß die Signalgabe im Form wörtlicher Befehle, z. B. Schalten, Gas geben, erfolgt

4. Anordnung nach Anspruch 1 bis 3, dadurch gekennzeichnet, daß parallel zur Signalgabe Registriermittel eines Fahrtschreibers angesteuert werden.

## Claims

1. Device for obtaining an information with respect to an economic operation of a vehicle with an internal combustion engine with
— several sensors (1, 3 ; 4, 34 ; 26) for sensing different operational data of the vehicle of which one is a revolution sensor (1, 3) ;
— comparator devices (9, 17, 26) for determining whether the momentary sensed value of the operational data belongs to a predetermined range of values by comparing the momentary value with threshold values limiting each value range,
— a combinatorial circuit (13) for forming an operational value representing an operational state of the vehicle by combining the results of the comparison,
— an indicating and evaluating circuit (28, 29) for indicating the result of an evaluation effected along a predetermined evaluation of criteria of the operational data given by the combinatorial circuit (13) which comprises signal generators (29) for giving several signal states one signal state being attributed to a group of equally valued combinations,
characterized in that
— additionally to the revolution sensor (1, 3) an accelerator sensor (26) as well as an acceleration sensor (4, 33) are provided which acceleration sensor is operated by the output signal of a distance sensor (4) for the distances covered by the vehicle,
— the comparator devices (9, 17) attributed to the revolution sensor (1, 3) as well as to the acceleration sensor (4, 34) within the comparator devices are provided with means for setting the threshold values and
— the combinatorial circuit being designed as a matrix circuit (13) so that the operational value is combined out of output signals of all comparator devices (9, 17, 26) delivering the comparison results.

2. Device according to claim 1, characterized in that
the combination of the operational data supplied by the sensors is effected by applying a microprocessor (33) so that for each revolution value determined a code is formed representing the individual revolution range,
in that for each acceleration value a code is formed representing the acceleration range,
in that apart from that a code is formed for each positional range of the accelerator, and
in that the codes determined are introduced into a working store of the microprocessor (33) via an or-circuit to form a code word which after being treated with the predetermined content of the program store in the calculating part of the microprocessor (33) releases a corresponding signal.

3. Device according to claims 1 and 2, characterized in that
a signal generator (29) is provided comprising several indicating lamps of differing colouring, and/or that the signals are given as verbal commands such as switch, accelerate, etc.

4. Device according to Claims 1 to 3, characterized in that parallelly to the signal output the recording means of a tachograph are controlled.

## Revendications

1. Dispositif pour l'obtention d'un renseignement concernant la rentabilité du mode de fonctionnement d'un véhicule automobile avec moteur à combustion, comprenant
— plusieurs capteurs (1, 3 ; 4, 34, 26) relevant chacun des grandeurs de fonctionnement différentes du véhicule automobile et dont l'un est un capteur de vitesses de rotation (1, 3) ;
— des dispositifs comparateurs (9 ; 17 ; 26) pour la détermination de l'appartenance des valeurs momentanées respectivement relevées des grandeurs de fonctionnement à des plages de valeurs déterminées par comparaison des valeurs momentanées avec des valeurs de seuil représentant des limites des plages de valeur,
— un circuit combinatoire (13) pour la formation d'une valeur de fonctionnement caractérisant l'état de fonctionnement du véhicule automobile par combinaison des résultats de comparaison,
— un circuit d'affichage et de notation (28, 29) pour l'affichage du résultat d'une notation effectuée à l'aide de critères de notation préétablis de la valeur de fonctionnement engendrée par le circuit combinatoire (13) qui comprend des générateurs de signaux (29) pour la réalisation de plusieurs états de signal, un état de signal étant chaque fois associé à un groupe de combinaisons de notations identiques,
caractérisé par le fait que
— en plus du capteur de vitesses de rotation (1, 3) est prévu un capteur de positions de pédale des gaz (26) ainsi qu'un capteur d'accélérations (4, 34) qui est alimenté par le signal de sortie d'un capteur de distances (4) pour les distances parcourues par le véhicule automobile,
— les circuits comparateurs (9 ou 17) associés aux capteurs de vitesses de rotation (1, 3) ainsi qu'aux capteurs d'accélérations (4, 34) à l'intérieur des dispositifs comparateurs sont pourvus chacun de moyens pour le réglage des valeurs de seuil, et
— le circuit combinatoire du circuit matriciel (13) est réalisé de telle sorte que la valeur de fonctionnement se compose des signaux de sortie de tous les circuits comparateurs (9, 17, 26) représentant les résultats de comparaison.

2. Dispositif selon la revendication 1, caractérisé par le fait
que le traitement des grandeurs de fonctionnement fournies par les capteurs se fait à l'aide d'un microprocesseur (33), de telle sorte que pour chaque valeur de vitesse de rotation déterminée est formé un élément de mots de code caractérisant la plage de vitesses de rotation respective,

que pour chaque valeur d'accélération déterminé est formé un élément de mots de code caractérisant la plage d'accélérations respective,

que, en outre, un élément de mots de code est formé pour la plage de positions respective de la pédale des gaz et

que les éléments de mots de code formés sont logiquement réunis, dans une mémoire de travail du microprocesseur (33), en un mot de code qui déclenche un signal correspondant après un traitement ultérieur avec le contenu déterminé conformément à la notation d'une mémoire de programme dans l'unité arithmétique du microprocesseur (33).

3. Dispositif selon l'une quelconque des revendications 1 et 2, caractérisé par le fait

que l'on a prévu, comme générateur de signaux (29), plusieurs lampes d'affichage de couleurs différentes

et/ou que la signalisation se fait sous forme d'instructions littérales, par exemple changer de vitesse, mettre les gaz.

4. Dispositif selon l'une quelconque des revendications 1 à 3, caractérisé par le fait que, parallèlement à la signalisation, des moyens d'enregistrement d'un enregistreur de route sont attaqués.

| Betriebsgrößen | | | | | | | | | Bewertung der Fahrweise | Signale | | | Befehle | |
|---|---|---|---|---|---|---|---|---|---|---|---|---|---|---|
| $n_1$ | $n_2$ | $n_3$ | $-b$ | $\pm b_0$ | $+b$ | $s_1$ | $s_2$ | $s_3$ | | grün | gelb | rot | Gas | schalt. |
| | | | | | | | | | gut | | | | | |
| | | | | | | | | | bedingt befr. | | | | | |
| | | | | | | | | | gut | | | | | |
| | | | | | | | | | bedingt befr. | | | | | |
| | | | | | | | | | bedingt befr. | | | | | |
| | | | | | | | | | gut | | | | | |
| | | | | | | | | | gut | | | | | |
| | | | | | | | | | bedingt befr. | | | | | |
| | | | | | | | | | bedingt befr. | | | | | |
| | | | | | | | | | gut | | | | | |
| | | | | | | | | | schlecht | | | | | |
| | | | | | | | | | gut | | | | | |
| | | | | | | | | | gut | | | | | |
| | | | | | | | | | schlecht | | | | | |
| | | | | | | | | | schlecht | | | | | |
| | | | | | | | | | gut | | | | | |
| | | | | | | | | | schlecht | | | | | |
| | | | | | | | | | schlecht | | | | | |

FIG. 1

0 023 283

FIG. 2

0 023 283

FIG.3

Start

A

B

C

D

E

F

G

H

J